# EUROPÄISCHE PATENTSCHRIFT

(11) **EP 1 673 238 B1**
(45) Veröffentlichungstag und Bekanntmachung des Hinweises auf die Patenterteilung: **14.04.2010**
(21) Anmeldenummer: 04761071.2
(22) Anmeldetag: 14.10.2004
(51) Int. Cl.: B60B 21/06, B60B 5/02

(54) **FELGE**
RIM
JANTE

(30) Priorität: 14.10.2003 AT 16192003
(43) Veröffentlichungstag der Anmeldung: 28.06.2006
(73) Patentinhaber: XENTIS Composite Produktions- & Handels Ges.m.b.H., 8580 Köflach (AT)
(72) Erfinder: POSSARNIG, Gerald, A-8010 Graz (AT); SACHL, Friedrich, A-8152 Stallhofen (AT); HERMANN, Manfred, A-8563 Ligist (AT)
(74) Vertreter: Nemec, Harald
(86) Internationale Anmeldenummer: PCT/AT2004/000349
(87) Internationale Veröffentlichungsnummer: WO 2005/035273

(56) Entgegenhaltungen:
- FR-A- 910 645
- FR-A- 2 702 707
- US-A1- 2002 108 249
- PATENT ABSTRACTS OF JAPAN Bd. 1996, Nr. 06, 28. Juni 1996 (1996-06-28) -& JP 08 034075 A (BRIDGESTONE CORP), 6. Februar 1996 (1996-02-06)

## Beschreibung

Die Erfindung betrifft eine Felge für Räder von Fahrzeugen, insbesondere für Fahrräder oder für mit Laufrädern von Fahrrädern ausgestattete Fahrzeuge, mit einem zur Aufnahme einer Auflage eines Reifens dienenden Felgenbett, einteilig gebildet aus einem Felgenboden und diesen seitlich begrenzenden Felgenhörnern, welches Felgenbett aus Faserverbundwerkstoff gebildet ist, sowie ein Verfahren zur Herstellung einer solchen Felge.

Bei Felgen kommt es durch den Reifeninnendruck zu einer großen Belastung der Felgenhörner, insbesondere bei Spezialfelgen, wie z.B. für Hochleistungsfahrräder, bei denen die Reifen unter einem sehr hohen Innendruck stehen. Die Herstellung solcher Felgen ist sehr aufwendig, und es ist bisher nicht gelungen, einen günstigen Faserverlauf für ein solches Felgenprofil zu verwirklichen, insbesondere gelingt es nicht, eine hohe Dauerhaltbarkeit unter statischem Reifendruck zu gewährleisten.

Aus der US 2002/0108249 A1 und der WO 02/26510 A1 ist es bekannt, Felgen der eingangs beschriebenen Art unter Zuhilfenahme der sogenannten "Faltkerntechnik" herzustellen. Hierbei wird ein Felgenrohling in eine Felgenform eingelegt, wobei zwischen dem Felgenboden und den Felgenhörnern ein Faltkern vorgesehen wird, der die Form des Raumes zwischen Felgenboden und Felgenhörnern bei der Verfestigung des Felgenrohlings in der Felgenform bestimmt. Das Verfahren dieser Art ist zeit- und kostenaufwendig, zumal die Faltkerne, die sich über den Umfang erstrecken müssen, nicht nur radial geteilt sein müssen, sondern auch in der Felgenebene geteilt sein müssen, um sie nach dem Verfestigen der Felge wiederum ausbauen und wiederverwenden zu können.

Das Einlegen dieser mehrteiligen Kerne, das Ausrichten derselben auf dem Formrohling, der noch nicht erhärtet ist, und das Entfernen dieser Kernteile nach Erhärten der Felge gestaltet sich manuell aufwendig und erfordert ein besonderes Geschick, zumal es sich bei den Kernteilen um Gebilde mit einer kleinen Querschnittsfläche und relativ großer Länge handelt, die dementsprechend fragil sind. Dementsprechend hoch ist die Ausfallsquote.

Aus der US 2002/0108249 A1 ist es auch bekannt, einteilige Kerne vorzusehen. Solche einteilige Kerne müssen jedoch sehr flexibel sein, um sie nach dem Erhärten der Felge aus dem Raum zwischen den Felgenhörnern und dem Felgenboden entfernen zu können. Nach dem Verfestigen der Felge müssen daher diese vorzugsweise aus Silikon gefertigten Kerne mit Spezialzangen aus der Felge herausgezogen werden, was oftmals auch zu Beschädigungen an der fertigen Felge führen kann.

Ein weiteres Problem bei Kernen gemäß US 2002/0108249 A1 ist dadurch gegeben, dass man in der Gestaltung der Querschnittsform der Kerne beschränkt ist, wodurch sich oftmals ungünstige Radien an den Abrundungen der Felge bzw. Kanten an der Felge, insbesondere am Übergang zwischen Felgenboden und Felgenhorn, ergeben, die nicht belastungsgerecht dimensioniert werden können.

Aus der AT 401.638 B ist eine Felge der eingangs beschriebenen Art bekannt, bei der zwei von einer Zwischenwand getrennte Fächer mit Füllmaterial versehen sind, von denen das radial äußere Fach nach außen offen ist. Als Füllmaterial dient im äußeren Fach eine Schaumeinlage.

Die JP 08-034075 offenbart dem Oberbegriff des Anspruchs 1.

Die Erfindung bezweckt die Vermeidung dieser Nachteile und Schwierigkeiten und stellt sich die Aufgabe, eine Felge der eingangs beschriebenen Art zu schaffen, die in einfacher Weise und mit großer Sicherheit, d.h. unter Vermeidung von Fehlern, herstellbar ist. Insbesondere soll es möglich sein, die Herstellzeit der Felge gegenüber dem Stand der Technik deutlich zu reduzieren. Weiters soll die Felge belastungsgerecht gestaltet werden können, ohne dass kostenintensive besondere Maßnahmen zu ergreifen sind. Der Herstellprozess soll stets stabil und mit hoher Reproduzierbarkeit verwirklichbar sein. Weiters sollen die Felgen in besonders leichter Ausführungsform, wie sie beispielsweise für Rennfahrräder eingesetzt werden können, herstellbar sein. Hierbei ist es wiederum besonders wichtig, dass die Felge trotz Leichtbauweise besonders stabil ist, sodass man z.B. auch ohne vorgespannte Drahtspeichen für Fahrräder das Auslangen findet oder dass man einen hohen Reifendruck anwenden kann.

Diese Aufgabe wird bei einer Felge der eingangs beschriebenen Art erfindungsgemäß dadurch gelöst, dass im Felgenbett eine die Auflage des Reifens aufnehmende und mit dem Felgenbett fest verbundene, vorzugsweise einteilige, von einem beim Herstellen benutzten und den vom Felgenboden und den Felgenhörnern begrenzten Raum füllenden verlorenen Kern gebildete Gegenauflage eingebettet ist, wobei die Gegenauflage an den mit der Auflage des Reifens in Kontakt gelangenden Flächen mechanisch, insbesondere spanend, bearbeitet ist

Durch die mit dem Felgenbett fest verbundene Gegenauflage gelingt es, besondere belastungsgerechte Querschnittsformen der Felge ohne größeren Aufwand zu verwirklichen. Der Reifen findet an der Gegenauflage eine Abstützung, wodurch wiederum die Gestaltung der Felgenhörner funktionsgerecht vorgenommen werden kann, sodass extreme Belastungsspitzen an den Felgenhörnern vermieden werden können. Zudem kann der nicht wiederverwendbare Kern einteilig gestaltet sein und eine für seine einfache Handhabung entsprechend hohe Steifigkeit und Festigkeit aufweisen.

Eine bevorzugte Ausführungsform ist **dadurch gekennzeichnet, dass** die Gegenauflage sowohl am Felgenboden als auch an den Felgenhörnern anliegt und einen zwischen der Auflage des Reifens und dem Felgenboden und den Felgenhörnern gebildeten Raum bei auf die Felge aufgezogenen Reifen ausfüllt, wobei zweckmäßig der Felgenboden zur Radnabe hin konvex gewölbt ausgebildet ist und mit stetiger Krümmungsänderung in die Felgenhörner übergeht.

Eine festigkeitsmäßig besonders günstige Ausführungsform ist **dadurch gekennzeichnet, dass** der Felgenboden mit den Felgenhörnern im Querschnitt ellipsenförmig oder ein Oval bildend ausgebildet ist.

Für hohe Belastungen schließt zweckmäßig an den Felgenboden ein zur Radnabe hin ausgerichteter Hohlraum an, der von mit dem Felgenbett integral gestaltetem Faserverbundwerkstoff begrenzt ist, und dessen Seitenwände in die Felgenhörner sprungstellenfrei übergehen.

Als Werkstoff für den Kern kommen insbesondere thermoplastischer Kunststoff oder duroplastischer Kunststoff oder Naturstoff, wie Holz, sowie gegebenenfalls umgearbeiteter Naturstoff in Frage, wobei der Kern vorzugsweise Füllstoff enthält, insbesondere Füllstoff metallischer, organischer und/oder mineralischer Natur.

Ein Verfahren zum Herstellen einer erfindungsgemäßen Felge, bei der ein Felgenrohling in eine Felgenform eingelegt wird und dort selbst in die gewünschte Felgenform umgeformt wird, und zwar unter Verfestigung des eingesetzten Materials, wobei der Felgenrohling und ein aus Faserverbundwerkstoff gebildetes Felgenbett mit einem Felgenboden und diesen seitlich begrenzenden Felgenhörnern aufweist, ist **dadurch gekennzeichnet, dass** in dem vom Felgenboden und den Felgenhörnern begrenzten Raum ein diesen Raum füllender verlorener Kern vor dem Einlegen in die Felgenform eingesetzt wird und dass der Kern nach Verfestigung des Felgenrohlings mechanisch, insbesondere zerspanend, bearbeitet wird, und zwar unter Ausbildung einer die Auflage eines Reifens aufnehmenden Gegenauflage.

Beim mechanischen Bearbeiten des Kerns werden vorzugsweise auch die Ränder der Felgenhörner mechanisch bearbeitet.

Eine bevorzugte Verfahrensvariante ist **dadurch gekennzeichnet, dass** an der vom Felgenboden und den Felgenhörnern begrenzten Innenseite des Felgenrohlings während des Kontaktes dieser Innenseite mit dem Kern in einer Verfahrensstufe ein ein Verkleben des Kerns mit dem Felgenrohling bewirkendes Harz in flüssiger Form vorliegt.

Vorzugsweise wird für den Kern ein Kunststoff verwendet, dessen Oberfläche zum Zweck besserer Verklebbarkeit chemisch aktiviert werden kann. Diese Aktivierung der Oberfläche erfolgt zweckmäßig durch Beflämmen, und/oder Aufrauhen und/oder Ätzen mit geeigneten Chemikalien und/oder Koronabehandlung.

Die Erfindung ist nachfolgend anhand einiger Ausführungsbeispiele näher erläutert, wobei Fig. 1 einen Querschnitt durch eine Felge für Fahrräder, insbesondere Rennräder, Fig. 2 einen Querschnitt durch die Felge mit eingebautem Reifen und Fig. 3 einen Querschnitt durch eine Felgenform mit eingelegtem Reifenrohling veranschaulichen. In den Fig. 4, 5 und 6 sind Varianten der Verstärkungsschichten mit unterschiedlichen Ausrichtungen der eingelegten Fasern gezeigt.

Es liegt im Rahmen der Erfindung, eine erfindungsgemäße Felge auch für Fahrzeuge anderer Art, insbesondere auch für motorgetriebene Fahrzeuge, einzusetzen.

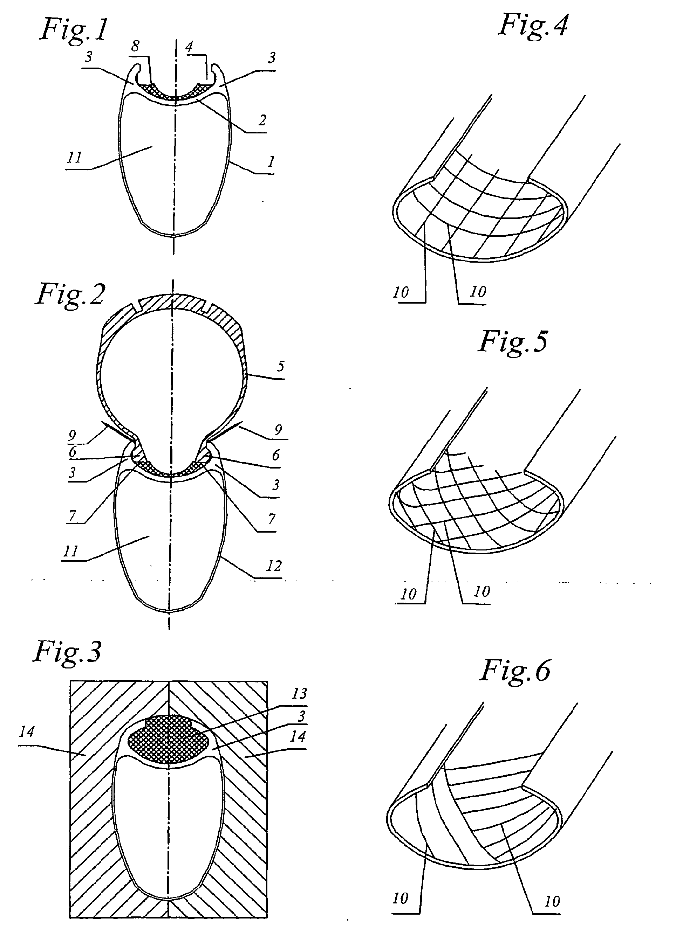

Die in Fig. 1 dargestellte Felge weist einen Felgenboden auf, der von seitlich in radialer Richtung vorragenden Felgenhörnern 3 begrenzt ist. In den Raum 4 zwischen Felgenhörnern 3 und Felgenboden 2 ist der Reifen 5 mit seinen Reifenwülsten 6 einsetzbar, wobei im vom Felgenboden 2 und den Felgenhörnern 3 gebildeten Felgenbett eine die Auflagen 7 des Reifens 5 aufnehmende und mit dem Felgenbett fest verbundene Gegenauflage 8 vorgesehen ist. An dieser Gegenauflage stützen sich die Reifenwülste 6 satt ab.

Durch die Gegenauflage 8 gelingt es, den Felgenboden 2 stark gewölbt auszubilden, wobei bevorzugt der Felgenboden 2 mit den Felgenhörnern 3 einen Teilellipsenquerschnitt bildet und die Felgenhörner 3 sprungstellenfrei in den Felgenboden 2 übergehen. Die Felge 1 selbst ist aus einem Faserverbundwerkstoff gebildet, und es gelingt durch die Gegenauflage 8, den Querschnitt des Felgenbettes für die auftretenden, durch den Reifendruck verursachten Kräfte, die in Fig. 2 durch Pfeile 9 veranschaulicht sind, optimal zu gestalten. Wie aus den Fig. 4, 5 und 6 zu ersehen ist, können die Fasern 10 des Fasergeleges des Faserverbundwerkstoffes sich in Umfangsrichtung und quer dazu erstrecken (Fig. 4) oder kreuzweise verlegt werden oder auch schichtenweise kreuzweise (vgl. die Fig. 5 und 6).

Wie aus Fig. 1 zu ersehen ist, schließt an den Felgenboden 2 ein zur nicht dargestellten zur Radnabe hin ausgerichteter Hohlraum 11 radial nach innen an, der von mit dem Felgenbett integral gestaltetem Verbundwerktsoff begrenzt ist und dessen Seitenwände 12 in die Felgenhörner 3 sprungstellenfrei übergehen.

Zur Herstellung der erfindungsgemäßen Felge 1 wird wie folgt vorgegangen:

Zunächst wird der Felgenrohling aus den mit Harz vorimpregnierten Fasergelegen 10 geformt, wobei zwischen dem Felgenboden 2 und den Felgenhörnern 3 ein Kern 13 eingelegt wird, der den Raum 4 des vom Felgenboden 2 und den Felgenhörnern 3 gebildeten Felgenbetts komplett füllt.

Dieser Felgenrohling wird sodann in die Felgenform 14 eingelegt und dort in die gewünschte Felgenquerschnittsform umgeformt, und zwar unter Verfestigung des eingesetzten Materials durch Hitzeeinwirkung, wobei der Kern 13 vorzugsweise mit den Felgenhörnern 3 und dem Felgenboden 2 verklebt. Dies kann beispielsweise durch zwischen dem Kern 13 und dem Felgenboden 2 und den Felgenhörnern 3 vorhandenes flüssiges Harz bewirkt werden. Da der Kern 13 einteilig und aus festem Material gefertigt sein kann, gestaltet sich das Formen des Felgenrohlings und das Einlegen des Felgenrohlings in die Felgenform 14 relativ einfach.

Nach dem Einlegen des Felgenrohlings in die Felgenform 14 wird der zur Radnabe hin an den Felgenboden 2 anschließende Hohlraum 11 mittels des Drucksackverfahrens gebildet, sodass sich die Seitenwände 12 dieses Hohlraums 11 an die Felgenform 14 anpressen.

Nach dem Verfestigen der Felge 1 wird diese aus der Felgenform 14 herausgenommen und der Kern 13 spanend bearbeitet, bis er die gewünschte Kontur als Gegenauflage 8 zu den Auflagen 7 des Reifens 5 angenommen hat.

Zweckmäßig ist der Kern 13 aus einem leicht zerspanbaren Werkstoff, wie z.B. aus Thermoplastik oder Duroplastik, gefertigt. Hierfür kommen in Frage: ABS, PA, PP, PVC als thermoplastische Kunststoffe und als duroplastische Kunststoffe beispielsweise Epoxid, PU, Polyester, Vinylester. Weiters kann der Kern 13 auch aus Metall gebildet sein oder aus Naturstoff oder abgewandeltem Naturstoff, wie z.B. Holz oder Pressspanmaterial.

Bei allen Materialien des Kernes 13 können zur Verbesserung der Eigenschaften (Temperaturbeständigkeit, Diffusionsabhängigkeit gegenüber Reifenfüllgasen, Zerspanbarkeit, Farbe, Kratzfestigkeit, zur Senkung des spezifischen Gewichts, usw.) alleine und in Kombination Füllstoffe metallischer, organischer und mineralischer Natur beigefügt sein.

Der besondere Vorteil der erfindungsgemäßen Felge 1 ist ihre belastungsgerechte Tragestruktur. Bei geeigneter Werkstoffwahl des Kernmaterials kann auch eine hermetische Abdichtung erreicht werden, was insbesondere für schlauchlose Reifen 5 von Bedeutung ist. Alleine durch Faserverbundmaterialien kann diese Eigenschaft nicht erreicht werden.

## Patentansprüche

1. Felge (1) für Räder von Fahrzeugen, insbesondere für Fahrräder oder für mit Laufrädern von Fahrrädern ausgestattete Fahrzeuge, mit einem zur Aufnahme einer Auflage (7) eines Reifens (5) dienenden Felgenbett, einteilig gebildet aus einem Felgenboden (2) und diesen seitlich begrenzenden Felgenhörnern (3), **dadurch gekennzeichnet, dass** im Felgenbett, gebildet aus Faserverbundwerkstoff, eine die Auflage (7) des Reifens (5) aufnehmende und mit dem Felgenbett fest verbundene, vorzugsweise einteilige, von einem beim Herstellen benutzten und den vom Felgenboden (2) und den Felgenhörnern (3) begrenzten Raum füllenden verlorenen Kern (13) gebildete Gegenauflage (8) eingebettet ist, wobei die Gegenauflage (8) an den mit der Auflage (7) des Reifens (5) in Kontakt gelangenden Flächen mechanisch, insbesondere spanend, bearbeitet ist.

2. Felge nach Anspruch 1, **dadurch gekennzeichnet, dass** die Gegenauflage (8) sowohl am Felgenboden (2) als auch an den Felgenhörnern (3) anliegt und einen zwischen der Auflage (7) des Reifens (5) und dem Felgenboden (2) und den Felgenhörnern (3) gebildeten Raum (4) bei auf die Felge (1) aufgezogenen Reifen (5) ausfüllt.

3. Felge nach Anspruch 1 oder 2, **dadurch gekennzeichnet, dass** der Felgenboden (2) zur Radnabe hin konvex gewölbt ausgebildet ist und mit stetiger Krümmungsänderung in die Felgenhörner (3) übergeht.

4. Felge nach einem oder mehreren der Ansprüche 1 bis 3, **dadurch gekennzeichnet, dass** der Felgenboden (2) mit den Felgenhörnern (3) im Querschnitt ellipsenförmig oder ein Oval bildend ausgebildet ist. Oval bildend ausgebildet ist.

5. Felge nach einem oder mehreren der Ansprüche 1 bis 4, **dadurch gekennzeichnet, dass** an den Felgenboden (2) ein zur Radnabe hin ausgerichteter Hohlraum (11) anschließt, der von mit dem Felgenbett integral gestaltetem Faserverbundwerkstoff begrenzt ist und dessen Seitenwände (12) in die Felgenhörner (3) sprungstellenfrei übergehen.

6. Felge nach einem oder mehreren der Ansprüche 1 bis 5, **dadurch gekennzeichnet, dass** der die Gegenauflage (8) bildende Kern (13) aus thermoplastischem Kunststoff oder aus duroplastischem Kunststoff oder aus Naturstoff, wie Holz, gegebenenfalls umgearbeitetem Naturstoff, gebildet ist.

7. Felge nach einem oder mehreren der Ansprüche 1 bis 6, **dadurch gekennzeichnet, dass** der Kern (13) Füllstoff enthält, insbesondere Füllstoff metallischer, organischer und/oder mineralischer Natur.

8. Verfahren zum Herstellen einer Felge (1) gemäß einem oder mehreren der Ansprüche 1 bis 7, wobei ein Felgenrohling in eine Felgenform (14) mit einem die Form des Felgenbettes bildenden Kern eingelegt wird und in dieser in die gewünschte Felgenquerschnittsform umgeformt wird, und zwar unter Verfestigung des eingesetzten Felgenmaterials, wobei der Felgenrohling ein aus Faserverbundwerkstoff gebildetes Felgenbett mit einem Felgenboden (2) und diesen seitlich begrenzenden Felgenhörnern (3) aufweist, **dadurch gekennzeichnet, dass** in dem vom Felgenboden (2) und den Felgenhörnern (3) begrenzten Raum (4) ein diesen Raum (4) füllender verlorener Kern (13) vor dem Einlegen in die Felgenform (14) eingesetzt wird und dass der Kern (13) nach Verfestigung des Felgenrohlings mechanisch, insbesondere zerspanend bearbeitet wird, und zwar unter Ausbildung einer die Auflage (7) eines Reifens (5) aufnehmenden Gegenauflage (8).

9. Verfahren nach Anspruch 8, **dadurch gekennzeichnet, dass** mit dem mechanischen Bearbeiten des Kernes (13) auch die Ränder der Felgenhörner (3) mechanisch bearbeitet werden.

10. Verfahren nach Anspruch 8 oder 9, **dadurch gekennzeichnet, dass** an der vom Felgenboden (2) und den Felgenhörnern (3) begrenzten Innenseite des Felgenrohlings während des Kontaktes dieser Innenseite mit dem Kern (13) in einer Verfahrensstufe ein ein Verkleben des Kerns (13) mit dem Felgenrohling bewirkendes Harz in flüssiger Form vorliegt.

11. Verfahren nach einem oder mehreren der Ansprüche 8 bis 10, **dadurch gekennzeichnet, dass** für den Kern (13) ein chemisch aktivierbarer Werkstoff verwendet wird.

12. Verfahren nach Anspruch 11, **dadurch gekennzeichnet, dass** für den Kern (13) ein thermoplastischer oder duroplastischer Kunststoff verwendet wird.

13. Verfahren nach Anspruch 11 oder 12, **dadurch gekennzeichnet, dass** die chemische Aktivierung des Kernes (13) durch Beflämmen und/oder Aufrauhen und/oder chemisch Ätzen und/oder Koronabehandlung der Oberfläche des Kerns (13) erfolgt.

## Claims

1. A rim (1) for wheels of vehicles, in particular for bicycles or for vehicles fitted with running wheels of bicycles, comprising a rim base serving for the reception of a support (7) of a tyre (5), formed in one piece from a rim bottom (2) and rim flanges (3) limiting said rim bottom in a lateral manner, **characterized in that** a preferably one-piece counter support (8) which is formed by a dead core (13) used during production and filling the space limited by the rim bottom (2) and the rim flanges (3) and which receives the support (7) of the tyre (5) and is rigidly connected to the rim base is embedded in the rim base formed from a fibre composite material, wherein the counter support (8) is processed in a mechanical, especially machining, manner on the surfaces which come into contact with the support (7) of the tyre (5).

2. A rim according to claim 1, **characterized in that** the counter support (8) rests both against the rim bottom (2) and against the rim flanges (3) and fills a space (4) formed between the support (7) of the tyre (5) and the rim bottom (2) and the rim flanges (3) if the tyre (5) is mounted onto the rim (1).

3. A rim according to claim 1 or 2, **characterized in that** the rim bottom (2) is shaped so as to be curved in a convex manner toward the wheel hub, merging into the rim flanges (3) with a continuous change in curvature.

4. A rim according to one or several of claims 1 to 3, **characterized in that** the cross-section of the rim bottom (2) comprising the rim flanges (3) is designed in an elliptical shape or in an oval form.

5. A rim according to one or several of claims 1 to 4, **characterized in that** a cavity (11) oriented toward the wheel hub is attached to the rim bottom (2), which cavity is limited by a fibre composite material formed integrally with the rim base and wherein the side walls (12) of said cavity merge into the rim flanges (3) without any irregularities.

6. A rim according to one or several of claims 1 to 5, **characterized in that** the core (13) forming the counter support (8) is formed from a thermoplastic material or from a thermosetting material or from a natural material such as wood, optionally from a modified natural material.

7. A rim according to one or several of claims 1 to 6, **characterized in that** the core (13) contains a filling material, in particular a filling material of a metallic, organic and/or mineral nature.

8. A process for the production of a rim (1) according to one or several of claims 1 to 7, wherein a rim blank is inserted into a rim mould (14) comprising a core forming the shape of the rim base and is formed therein into the desired cross-sectional shape of the rim, whereby the rim material used is hardened, with the rim blank having a rim base formed from a fibre composite material and comprising a rim bottom (2) and rim flanges (3) limiting said rim bottom in a lateral manner, **characterized in that,** in the space (4) limited by the rim bottom (2) and the rim flanges (3), a dead core (13) filling said space (4) is inserted prior to the insertion into the rim mould (14) and that the core (13) is processed in a mechanical, especially machining, manner after the rim blank has hardened, whereby a counter support (8) receiving the support (7) of a tyre (5) is formed.

9. A process according to claim 8, **characterized in that**, when processing the core (13) in a mechanical manner, also the edges of the rim flanges (3) are processed in a mechanical manner.

10. A process according to claim 8 or 9, **characterized in that,** on the inside of the rim blank which is limited by the rim bottom (2) and the rim flanges (3), a resin causing the core (13) to adhere to the rim blank is provided in liquid form in a processing step during the contact of said inside with the core (13).

11. A process according to one or several of claims 8 to 10, **characterized in that** a chemically activatable material is used for the core (13).

12. A process according to claim 11, **characterized in that** a thermoplastic or thermosetting material is used for the core (13).

13. A process according to claim 11 or 12, **characterized in that** the chemical activation of the core (13) is effected by flame treatment and/or roughening and/or chemical etching and/or corona treatment of the surface of the core (13).

## Revendications

1. Jante (1) pour roue de véhicule, en particulier de bicyclettes ou de véhicules équipés de roues de bicyclette, et présentant
un lit de jante qui sert à reprendre une surface d'appui (7) de bandage de roue (5) et qui est formé d'un seul tenant d'un fond de jante (2) et de cornes de jante (3) qui le délimitent latéralement,
**caractérisée en ce que**
une surface de contre-appui (8) formée par un noyau perdu (13) utilisé lors de la fabrication et remplissant l'espace délimité par le fond de jante (2) et les cornes de jante (3), qui reprend la surface d'appui (7) du bandage de roue (5) et qui est relié solidairement au lit de jante, de préférence d'un seul tenant, et
**en ce que** les surfaces de contre-appui (8) qui rentrent en contact avec les surfaces d'appui (7) du bandage de roue (5) sont usinées mécaniquement, en particulier par enlèvement de matière.

2. Jante selon la revendication 1, **caractérisée en ce que** la surface de contre-appui (8) repose à la fois sur le fond de jante (2) et sur les cornes de jante (3) et remplit un espace (4) formé entre la surface d'appui (7) du bandage de roue (5) posé sur la jante (1), le fond de jante (2) et les cornes de jante (3).

3. Jante selon les revendications 1 ou 2, **caractérisée en ce que** le fond de jante (2) a une configuration courbe convexe en direction du moyeu de la roue et se prolonge en les cornes de jante (3) par une modification constante de sa courbure.

4. Jante selon l'une ou plusieurs des revendications 1 à 3, **caractérisée en ce que** le fond de jante (2) avec les cornes de jante (3) a une section transversale elliptique ou ovale.

5. Jante selon l'une ou plusieurs des revendications 1 à 4, **caractérisée en ce qu'**un espace creux (11), orienté vers le moyeu de la roue, délimité par un matériau composite fibreux formé d'un seul tenant avec le lit de jante, et dont les parois latérales (12) se prolongent sans rupture de continuité par les cornes de jante (3), se raccorde au fond de jante (2).

6. Jante selon l'un ou plusieurs des revendications 1 à 5, **caractérisée en ce que** le noyau (13) qui forme la surface de contre-appui (8) est formé d'une matière synthétique thermoplastique, d'une matière synthétique thermodurcissable ou d'une matière naturelle, par exemple le bois, et éventuellement d'une matière naturelle transformée.

7. Jante selon l'une ou plusieurs des revendications 1 à 6, **caractérisée en ce que** le noyau (13) contient une charge et en particulier une charge de nature métallique, organique et/ou minérale.

8. Procédé de fabrication d'une jante (1) selon l'une ou plusieurs des revendications 1 à 7, dans lequel:
une ébauche de jante est placée dans un moule de jante (14) avec un noyau qui donne sa forme au lit de jante et est déformé dans ce moule de manière à obtenir la section transversale de jante souhaitée lors de la solidification du matériau de jante utilisé,
l'ébauche de jante présentant un lit de jante doté d'un fond de jante (2) et de cornes de jante (3) qui délimitent ce fond latéralement, le lit de jante étant formé d'un matériau composite fibreux,
**caractérisé en ce que**
un noyau perdu (13) qui remplit l'espace (4) délimité par le fond de jante (2) et les cornes de jante (3) est placée dans cet espace (4) avant la pose dans le moule de jante (14) et
**en ce qu'**après solidification de l'ébauche de jante, le noyau (13) est usiné mécaniquement, en particulier par enlèvement de matière, pour former une surface de contre-appui (8) qui reprend la surface d'appui (7) du bandage de roue (5).

9. Procédé selon la revendication 8, **caractérisé en ce que** les bords des cornes de jante (3) sont usinés mécaniquement en même temps que l'usinage mécanique du noyau (13).

10. Procédé selon les revendications 8 ou 9, **caractérisé en ce que** dans une étape de traitement, une résine sous forme liquide est prévue sur le côté intérieur de l'ébauche de jante délimitée par le fond de jante (2) et les cornes de jante (3) pendant le contact de ce côté intérieur avec le noyau (13) et a pour effet de faire adhérer le noyau (13) à l'ébauche de jante.

11. Procédé selon l'une ou plusieurs des revendications 8 à 10, **caractérisé en ce qu'**un matériau chimiquement activable est utilisé pour le noyau (13).

12. Procédé selon la revendication 11, **caractérisé en ce qu'**une matière synthétique thermoplastique ou thermodurcissable est utilisée pour le noyau (13).

13. Procédé selon les revendications 11 ou 12, **caractérisé en ce que** l'activation chimique du noyau (13) s'effectue en exposant à la flamme, en rendant rugueuse, en attaquant chimiquement et/ou en traitant par effet corona la surface du noyau (13).
